# EUROPEAN PATENT SPECIFICATION

(11) **EP 4 683 291 B1**
(45) Date of publication and mention of the grant of the patent: **10.06.2026**
(21) Application number: 24189230.6
(22) Date of filing: 17.07.2024
(51) Int. Cl.: H04L 45/02, H04L 45/00

(54) **METHOD, COMPUTER PROGRAM, AND APPARATUS FOR ROUTING DATA AT A NETWORK NODE AND ROUTE CONFIGURATION AT A NETWORK GATEWAY**
VERFAHREN, COMPUTERPROGRAMM UND VORRICHTUNG ZUM ROUTEN VON DATEN AN EINEM NETZWERKKNOTEN UND ROUTENKONFIGURATION AN EINEM NETZWERKGATEWAY
PROCÉDÉ, PROGRAMME INFORMATIQUE ET APPAREIL POUR ROUTER DES DONNÉES AU NIVEAU D'UN NOEUD DE RÉSEAU ET CONFIGURATION DE ROUTE AU NIVEAU D'UNE PASSERELLE DE RÉSEAU

(43) Date of publication of application: 21.01.2026
(73) Proprietor: Deutsche Telekom AG, 53113 Bonn (DE)
(72) Inventor: BRITSCH, Matthias, 53639 Königswinter (DE); RASS, Jörg, 50859 Köln (DE); BREITBACH, Johannes Markus, 53227 Bonn (DE); SCHATZMAYR, Rainer, 53229 Bonn (DE)
(74) Representative: 2SPL Patentanwälte PartG mbB

(56) References cited:
- US-B2- 11 758 421
- NICK FEAMSTER ET AL: "Network-wide prediction of BGP routes", IEEE /ACM TRANSACTIONS ON NETWORKING, IEEE / ACM, NEW YORK, NY, US, vol. 15, no. 2, 1 April 2007 (2007-04-01), pages 253 - 266, XP058355558, ISSN: 1063-6692, DOI: 10.1109/TNET.2007.892876
- LI JUNIPER NETWORKS T: "A Routing Architecture for Satellite Networks draft-li-arch-sat-06; draft-li-arch-sat-06.txt", no. 6, 21 February 2024 (2024-02-21), pages 1 - 20, XP015165197, Retrieved from the Internet <URL:https://tools.ietf.org/html/draft-li-arch-sat-06> [retrieved on 20240221]
- RAVISHANKAR CHANNASANDRA ET AL: "Next-generation global satellite system with mega-constellations", INTERNATIONAL JOURNAL OF SATELLIT COMMUNICATIONS AND NETWORKING, 24 July 2020 (2020-07-24), GB, pages 6 - 28, XP055907545, ISSN: 1542-0973, Retrieved from the Internet <URL:https://onlinelibrary.wiley.com/doi/full-xml/10.1002/sat.1351> [retrieved on 20241217], DOI: 10.1002/sat.1351

## Description

### Field

Examples relate to a method, a computer program, and an apparatus for routing data at a network node and route configuration at a network gateway, more particularly, but not exclusively, to a concept for avoid routing shock in a situation, where the network topology changes frequently.

### Background

The transport infrastructure of today's data networks, including the internet, is installed at fixed locations. Routers, switches, servers, and entire data centers are housed in buildings or permanently installed outdoor cabinets and interconnected by network links, mainly based on optical fibers. Hence, the network topology formed by these nodes and the interconnecting fibers is also static. Changes in the topology occur only as a result of administrative actions, such as powering down interfaces, nodes, or entire sites, or due to errors caused by external influences such as flooding, fiber cuts by civil works, or power outages. To handle the impact of administrative changes and incidents on the network topology, long-proven routing protocols are implemented, which propagate local state changes across the network so each node can calculate an updated version of its routing table, reflecting the new topology and forwarding traffic according to the new situation. Such routing protocols, e.g., RIP (Routing Information Protocol), OSPF (Open Shortest Path First), ISIS (Intermediate System to Intermediate System), BGP (Border Gateway Protocol), have been in use for decades.

If topology changes occur in today's networks during nominal operations, such as in the case of mobile user equipment camped on mobile networks, dedicated protocol stacks and related control functionality are employed to abstract the movement from the transport infrastructure (see 3GPP's (3^{rd} Generation Partnership Project) GPRS (General Packet Radio Services) tunneling protocol for further reference).

Future networks will make use of a much wider variety of physical platforms on which the network functionality is hosted and will integrate different environments. These platforms include satellites, drones, ships, airplanes, and land vehicles. Current satellites are deployed in ever-growing large-scale constellations and are already equipped with technology for inter-satellite links (ISL). With the integration of these satellite constellations into the global communication infrastructure, future transport networks will include network nodes hosted on satellites and forwarding paths over satellite links. With drones and other aerial platforms being mass-produced and used in a growing variety of use cases, transport network topologies will also include nodes and links hosted on aerial platforms. Network nodes can also be expected to be hosted on cars, making use of satellite uplinks and spawning local networks in and around the car, on ships, airplanes, and trains. Such networks, comprising classical terrestrial nodes as well as aerial, spaceborne, mobile terrestrial, and maritime platform-hosted nodes, are called 3D (three-dimensional) networks.

In contrast to classical network topologies as described above, 3D network topologies are not static but dynamic. The movement of satellites causes frequent topology changes. Spaceborne and aerial platforms can only connect to ground stations if they are in line of sight to the ground station. Inter-satellite links can only be maintained when a certain angular speed between the satellites is not exceeded. In certain orbital constellations, i.e., Walker constellations with an inclination lower than 90°, satellite planes' trajectories cross each other, causing satellites on neighboring planes to swap places twice per circumnavigation. Network topologies integrating aerial, mobile land, or maritime platforms are further subject to the physical characteristics of such platforms. Due to their controllability, they can change positions relative to each other, move out of line of sight towards one another or stationary network nodes, and be impacted by atmospheric conditions such as rain or clouds, causing transmission disruption of optical and radio frequency links.

For the reasons described above, in static network topologies, status changes and the resulting topology changes are a rare occurrence. Hence, the number of updates that have to be processed by each node is limited, and the processing of each topology information message is finalized before the next update is received. This means the network nodes' control plane is able to converge the update into its routing information by calculating an up-to-date network topology, updating the routing table, and transferring the new version to the forwarding plane before the next calculation cycle starts. This results in a stable network topology. For the aforementioned 3D networks, the number of updates caused by topology changes and the physical platforms' movements relative to the number of network nodes is so high that for all networks which are not trivially small, the processing cannot be finalized before further updates are received. The network nodes are not able to converge the updates, and the network becomes unstable because there is no correct topology representation available at any given point in time. This state is called a routing shock. Please note that failure-caused topology changes also occur in dynamic network topologies, yet their number is small compared to the changes incurred by physical platforms' movements.

US Patent Publication No. 20220417140A1 discloses a routing device for forwarding data packets in a data network. The routing device establishes a communicative connection with multiple other such routing devices that implement the same functions. A data network includes multiple routing devices as described herein. In that data network, each routing device implements and applies a proactive approach with routing tables in a stable part of the data network, and a reactive approach in an unstable part of the data network. When a packet is transmitted from a stable part of the data network to an unstable part of the data network (or vice versa), the forwarding approach is changed along the path of the packet. Thus, the routing device and the data network mitigate the effect of overhead of proactive routing approaches and the latency of reactive routing approaches.

US 11 758 421 B2 has been cited by European Patent Office. NICK FEAMSTER ET AL: "Network-wide prediction of BGP routes", IEEE/ACM TRANSACTIONS ON NETWORKING, IEEE / ACM, NEW YORK, NY, US, vol. 15, no. 2, 1 April 2007, pages 253-266, XP058355558 has been further cited by European Patent Office.

### Summary

The invention is defined by the independent claims. Advantageous embodiments are defined by the dependent claims. Examples are based on the finding that the adaption of network nodes to topology changes can be enhanced by using priority information, which can be a basis at network nodes to make routing decisions. Multiple routes to the same destination can be evaluated through their priority information. Quick adaption to topology changes may be enabled by updating and maintaining priority information at the respective network nodes.

Examples provide a method for routing data at a network node. The method comprises receiving first priority update information for a first link to a destination from a first gateway, where the first gateway is on the first link and the network node and the first gateway are in one same domain, and the first link is from the first gateway to the destination outside of the domain. The method further comprises updating first priority information of first routing information used to direct data to the destination via the first link based on the received first priority update information, where the network node comprises second routing information used to direct data to the destination via a second link, and wherein the second routing information comprises second priority information. According to this method, when the network node receives data destined for the destination, the network node determines a transmission link for the data based on the updated first priority information and the second priority information and sends the data via the transmission link. As the first routing information and the second routing information to the same destination are kept by setting priorities for different routing information, that is for different links, the routing information of one or more inactive links would not be deleted, so that routing shock caused by frequent changes of routing information is avoided or substantially reduced.

In a further example, in response to the first link being in failure for sending data to the destination, the first priority update information causes a priority of the first link to be so low that the first link cannot be determined as the transmission link. This further example provides a specific way to both avoid deleting the routing information of a failed link and avoid data transmission on the failed link.

In the further example, a value of the first priority update information is the lowest value, that is minimum value, in its value range or a value of the first priority update information is a pre-determined value designed to cause the priority of the first link to be so low that the first link cannot be determined as the transmission link. This is a preference of setting values indicating priorities. In some other examples, to indicate the highest priority, the value of the first priority update information is set to the highest value, that is maximum value, within its value range.

In some examples, the method further comprises receiving second priority update information of the second link and obtaining the second priority information by updating previous second priority information based on the received second priority update information. It indicates that the priority information of routing information of each of a plurality of links could be updated.

In some further examples, the first priority update information, first priority information and second priority information, respectively, are associated with respective metrics indicating a priority value of the first and second link to the destination. For example, the first priority update information, first priority information and second priority information may be the metrics, respectively, comprise the respective metrics or be generated based on the respective metrics. Metrics may be metric values or be briefly called as values, and a metric may be a metric value or be briefly called a value.

In some further examples, the first priority information is based on a transmission capability of the first link, such as bandwidth, delay and quality of service, QoS, of the first link. The priority of the link will be higher when the transmission capability of the link is higher (higher bandwidth, lower delay, higher QoS), and the priority of the link will be lower when the transmission capability of the link is lower.

In some further examples, the sending of the data via the transmission link comprises routing the data via one or more network nodes of the domain, wherein the routing in the domain is based on local routing information communicated within the domain. In order to send data to its destination, the network node determines a gateway node on the border of its domain from a plurality of candidate gateway nodes based on the respective priority metric values of the gateway nodes, where each of the candidate gateway node is on a candidate link to the destination. The priority of the gateway node is the priority of the candidate link on which the gateway node is located, and which is stored locally at the network node. After the gateway node is determined, the network node routes the data to the determined gateway node based on the local routing information of the domain, so that the determined gateway node could route the data along the transmission path to the destination. Routing the data to the determined gateway node based on the local routing information includes that the network node searches a next hop by searching a routing table stored in the network node using a destination, such as a destination IP address. In an example where a destination refers to a destination IP address, the searching the routing table includes searching the routing table using the destination IP address, so that the network node obtains an IP address of a next hop of the network node.. The next hop could be the determined gateway node or another network node in the domain. If the next hop is the determined gateway, the IP address of the next hop is the IP address of the determined gateway, and the network node uses the IP address of the determined gateway to route the data to the determined gateway. If the next hop is another network node in the domain, the network node will obtain the IP address of the other network node from the routing table and route the data to the other network node by using the IP address of the network node. The other network node repeats the search and forwarding process based on the destination IP address to make the data to arrive at the determined gateway node.

The destination in the examples may be an Internet Protocol, IP, destination, such as an IP address or a range of IP address, or may be a destination of other addressing schemes and/or protocol stacks other than IP, such as AppleTalk, Internetwork Packet Exchange, IPX, Systems Network Architecture, SNA, and Zigbee, etc.

Another example is a computer program having a program code for performing one of the methods for routing data at a network node described herein, when the computer program is executed on a computer, a processor, or a programmable hardware component.

An apparatus for performing one of the methods for routing data at a network node described herein is another example. The apparatus comprises one or more interfaces configured to communicate in the communication system and one or more processing devices configured to perform one of the methods for routing data at a network node described herein. Examples further provide a communication system comprising an example of the apparatus. A further example is a network component, such as a server or an access node, comprising the apparatus.

Some other examples provide a method for route configuration in a network gateway. The method comprises determining priority update information of a link from the network gateway located in a first domain to a destination outside of the first domain. The method further comprises sending the priority update information of the link to at least one network node inside the first domain. Based on the priority information, this method could make the at least one network node inside the first domain to keep its routing information from being deleted frequently and therefore this method may avoid routing shock in the domain.

In some further examples, in response to the link being in failure for sending data to the destination, the priority update information is configured to set a priority of the link so low that the link cannot be determined by the node as a transmission link for data destined for the destination. The further examples provide a more specific way to avoid routing shock when failure of links occurs.

In some further examples, the determination of the priority update information is triggered based on an estimated link failure caused by comparative movement between the network gateway and another network gateway, which are two end points of the link. The comparative movement could be caused by movement of either network gateway, or by the movement of both gateways.

In some further examples, the network gateway has a more stable geographic relationship with the first domain than a second domain, wherein the first domain and the second domain are connected by the link. The network gateway belongs to the first domain and the movement of the network gateway is pre-configured to be the same to, similar to or aligned with the movement of the first domain so that the network gateway will not lose its connection with the first domain. As the network gateway does not belong to the second domain, the movement of network gateway is not required to be the same to, similar to or aligned with the movement of the second domain.

In some further examples, the priority update information is based on the transmission capability of the link, such as bandwidth, delay and quality of service, QoS, of the first link. The priority of the link will be higher when the transmission capability of the link is higher, and the priority of the link will be lower when the transmission capability of the link is lower.

In some further examples, sending the priority update information of the link to at least one node inside the domain comprises: multicasting the priority information of the link in the domain. In some other examples, the priority information of the link could be unicasted or broadcasted to the at least one node inside the domain.

Another example is a computer program having a program code for performing one of the methods for route configuration at a gateway described herein, when the computer program is executed on a computer, a processor, or a programmable hardware component.

An apparatus for performing one of the methods for route configuration at a gateway described herein is another example. The apparatus comprises one or more interfaces configured to communicate in the communication system and one or more processing devices configured to perform one of the methods for route configuration at a gateway described herein. Examples further provide a communication system comprising an example of the apparatus. A further example is a network component, such as a server or an access node, comprising the apparatus.

### Brief description of the Figures

Some examples of apparatuses and/or methods will be described in the following by way of example only, and with reference to the accompanying figures, in which
Fig. 1 shows a flowchart of an example of a method 10 for routing data at a network node;
Fig. 2 shows a flowchart of an example of a method 30 for route configuration in a network gateway;
Fig. 3 shows a block diagram of an example of an apparatus 20 for routing data;
Fig. 4 shows a block diagram of an example of an apparatus 40 for route configuration in a network gateway;
Fig. 5 shows a communication network with a dynamically changing topology 500;
Fig. 6 shows a communication network with a plurality of domains; and
Fig. 7 shows a communication network with a plurality of domains connected via link pairs.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Some additional terminologies are defined hereinafter. The meanings of some of all the terminologies could be used in some examples provided hereinafter for reference.

### Physical Platforms

**Physical platforms** are the hardware on which routing and forwarding logic is implemented. Such hardware, including routers and switches, is typically installed in telecommunication-related premises, such as PLMN (Public Land Mobile Network) radio sites, distributed and central offices, and data centers. In non-terrestrial networks, they can also be installed in satellites, drones, or any other type of air- and spaceborne vehicle. The ability of such vehicles to change their location relative to the Earth's surface and position relative to each other is shared by land and maritime vehicles. Hence, the latter two are categorized in the context of some examples as mobile physical platforms as well.

### Stationary Physical Platforms

**Stationary physical platforms** are not mobile, meaning their position relative to each other in the network topology does not change over time, and their link status changes only as a result of failures or configuration changes. These platforms typically include buildings or outdoor shelters hosting routers and switches. In the context of some examples, these routers and switches can function as PLMN radio backhaul, satellite ground stations, terrestrial network gateways, and other parts of terrestrial data routing and forwarding infrastructure.

### Mobile Physical Platforms

**Mobile physical platforms** can be spaceborne, airborne, marine, or landbound and are classified further according to the predictability of their movements. When further distinction is necessary, the specific type of platform, such as drone, ship, or land vehicle, is specifically mentioned.

Satellites are maneuverable but only to the extent required to reach their destination orbit and evade collisions with space debris or other satellites. Hence, their positioning, to the degree of precision required in the context of network topology, is predictable by orbital mechanics and can be calculated independently from the satellite itself by any node in the network, provided trajectory information is available at any given point in time.

Land, air-, and seaborne platforms differ from satellites in the controllability of their flight paths. They are controllable, e.g., by an embedded control system or a human operator at any point in time. Hence, their position is not predictable but can be queried using their innate communication capabilities or, in cases where movements are preplanned, by sharing the respective flight, travel, or navigation plan.

### Satellite Orbits and Constellations

Satellites are deployed in constellations comprising one or more satellites with coordinated orbits. A group of two or more satellites with coordinated orbits forms a constellation. The largest planned constellations comprise tens of thousands of satellites and are able to cover the entire surface of the Earth.

Satellites and constellations are differentiated according to the height of their orbits and the orientation of their trajectories. Commonly, three main orbital planes are defined:
1. Low Earth Orbit (LEO) satellites are deployed at altitudes between 300 to 2000 km. Due to their low orbit, a single satellite can cover only a limited area of the Earth's surface. Hence, LEOs are deployed in constellations comprising up to tens of thousands of satellites.
2. Medium Earth Orbit (MEO) satellites are deployed at heights between 2000 and 36000 km.
3. Geostationary (GEO) satellites are deployed at heights of 36000 km and above. At this height, an object in stationary orbit has an orbital period equal to the Earth's rotational period, resulting in the satellite being stationary relative to the Earth's surface.

For each of these classes of satellites, orbital mechanics allow for different orientations of trajectories, depending on variables such as the angle of the trajectory relative to the equator and the ellipticity of the trajectory. Each set of values for these variables forms a plane. Examples of constellations include Highly Elliptical Orbits (Molniya or Tundra orbits), Optimal Elliptical Constellation (OEC), Ellipso, Walker Constellations (Walker star and delta, delta V), and Sun-Synchronous Orbits. The majority of today's LEO and MEO satellite constellations are of the Walker delta type.

The stability of the network topology formed by a constellation depends on the type of constellation. A constellation of geostationary satellites forms a static topology. A Walker delta constellation includes sets of satellites arranged in several orbital planes, with each plane having the same inclination relative to the equator. The satellites within each plane are typically equally spaced, resulting in a symmetrical distribution of satellites around the Earth. The position of satellites in one plane does not change relative to other satellites in the same plane, hence the topology inside the plane is static, but they change position relative to satellites in other planes. Therefore, the planes form topologically stable subnetworks. Such topologically stable subnetworks can be found in various constellation types.

### Other Mobile Physical Platform Movements

**Airborne, land-based, and marine vessels** are steerable and hence can change their course at any given point in time based on human decision or algorithmic input. Thus, their positions cannot be predicted in the same way as satellites' positions.

To gather the position and course of these physical platforms and thus the information necessary to predict network topology, two possibilities exist. The position and course information can be queried from the platform or the nodes it hosts, or a predefined schedule can be queried. However, the course cannot be derived mathematically, and hence no predictions about the topology are possible, nor about topologically stable domains.

Nevertheless, topologically stable domains can be formed either as part of the flight planning or during the flight by including nodes hosted on physical platforms with similar trajectories into a domain and reassigning them to another domain once the position is no longer suitable for the current domain.

### Network Related Definitions

**Network Nodes or Nodes:** The network is formed of nodes performing routing and forwarding of data packets. Nodes are hosted on physical platforms such as satellites, drones, ships, trains, cars, etc. As platforms, even those of a specific type (e.g., satellite or drone) might differ regarding the hosted functionality, only those hosting routing and forwarding capabilities are considered network nodes; all others are excluded from the considerations. Each physical platform, specifically a satellite or drone, hosts at least one node.

**Address:** Each node has one or more addresses under which it is reachable, and which are propagated to other nodes. Addresses are sources and endpoints of communication; they are used to identify, route, and forward data packets.

**Subnetwork:** A subnetwork is a set of addresses forming a contiguous range, which is changed only by administrative action performed by the node operator. Nodes can join and leave subnetworks.

Network: The network includes the totality of all network nodes. They form a graph that is partially or wholly dynamic, meaning neighbor relationships between nodes in the network can change over time.

Routing and Forwarding: Routing and forwarding involve finding a route for data packets and forwarding them to the next hop in the route. They are designed so that all network nodes can reach all other network nodes, either directly or via other network nodes.

Domain or Routing Domain: A routing domain is a subset of network nodes with an internal topology not shared with the rest of the network. The entirety of nodes in a domain is represented to the outside world in a pooled way, for example, as one or more combined address ranges of all addresses used in the domain. Internally, the domain acts as its own network, forming a subnetwork. If a physical platform hosts more than one network node, they are in the same domain.

Substructure: Due to the fixed relationship between network nodes and physical platforms, the entirety of physical platforms hosting all network nodes in a domain is fixed as well. This entirety forms a substructure. The physical nodes forming a substructure share mobility characteristics, linking mobility patterns of physical nodes to routing domains, allowing the mapping of topological and physical characteristics. This creates domains including nodes whose topology towards each other is as static as possible but can be more dynamic towards the rest of the network.

Autonomous System or AS: An AS is a set of network nodes applying a common routing policy, running peering links with other autonomous systems.

End-to-End (e2e): End-to-End refers to the endpoints of a connection related to the protocol given by the context. For an IP connection, the endpoints are the interface addresses included in the source and destination fields of the IP packets belonging to this connection. For a TCP connection, the endpoints are the source and destination ports in the TCP header fields of the IP packets belonging to this connection.

Some examples disclose a method to reduce the amount of updates and avoid routing shocks in networks with dynamic topologies, including 3D networks. This method involves separating the network into routing domains and decoupling the propagation of status updates outside and inside the routing domains.

Additionally, two types of routing metrics may be employed to manage traffic, which, in combination, allow for traffic steering that takes into account the vastly different characteristics, capabilities, and capacities of links and nodes in a 3D network. This separation not only decreases the number of status updates to a level that can be managed by individual network nodes, but also enables traffic engineering by defining and applying routing policies based on these metrics.

The examples may be implemented on top of existing routing protocols and some exemplary selected routing protocols are used and described hereinafter. Although basic functionality can be achieved using existing routing protocols without changes, their performance and functionality for the described use can be advantageously improved by extending them with new information indicating priorities of different links between domains, which is also described hereinafter.

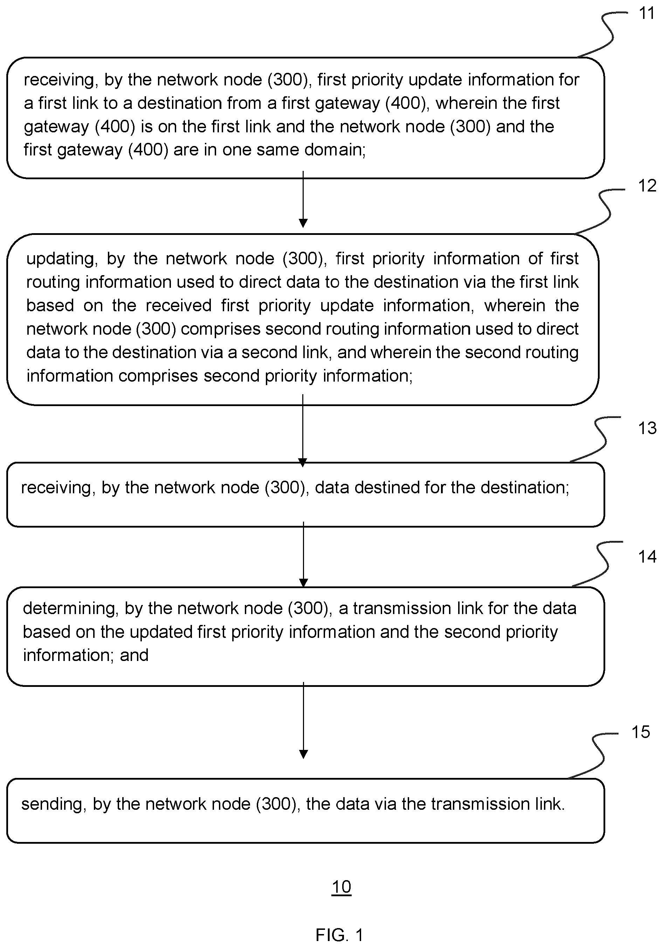

Fig. 1 shows a flowchart of an example of a method 10 for routing data at a network node. The method 10 for routing data at a network node comprises receiving 11 first priority update information for a first link to an destination from a first gateway, wherein the first gateway is on the first link and the network node and the first gateway are in one same domain; updating 12 first priority information of first routing information used to direct data to the destination via the first link based on the received first priority update information, wherein the node comprises second routing information used to direct data to the destination via a second link, and wherein the second routing information comprises second priority information. The method 10 for routing data at a network node further comprises receiving 13 data destined for the destination; determining 14 a transmission link for the data based on the updated first priority information and the second priority information. Furthermore, the method 10 for routing data at a network node comprises sending the data via the transmission link.

The method 10 may be performed by the network node and the network node refers to a single network node or a plurality of network nodes cooperating with each other to perform method 10. The destination may be Internet Protocol (IP) destination or a destination of other addressing schemes and/or protocol stacks other than IP, such as AppleTalk, Internetwork Packet Exchange (IPX) Systems Network Architecture (SNA) and Zigbee, etc.

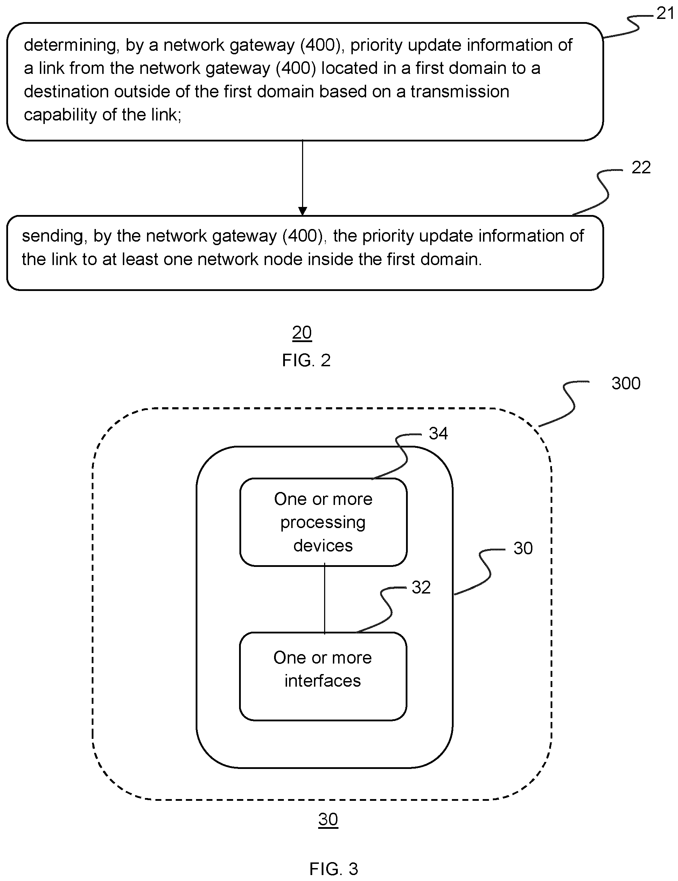

Fig. 2 shows a flowchart of an example of a method 20 for route configuration in a network gateway. The method 20 for route configuration comprises determining 21 priority update information of a link from the network gateway located in a first domain to a destination outside of the first domain; and sending 22 the priority update information of the link to at least one network node inside the first domain. In some examples, both the actions 21 and 22 are performed by the network gateway.

Fig. 3 shows a block diagram of an example of an apparatus 30 for routing data. The apparatus 30 for routing data at comprises one or more interfaces 32, which are configured to communicate with other nodes in the network, and which are coupled to one or more processing devices 34. The one or more processing devices 34 are configured to perform one of the methods 10 for routing data at a network node as described herein. Fig. 3 also illustrates an example of a network node 300 comprising an example of the apparatus 30. The example of the network node 300 is shown in dotted lines as it is optional from the perspective of the apparatus 30. The example of the network node 300 may be a node of an Internet Protocol, IP, network or a network based on one or more other protocols. In some other examples, the apparatus 30 itself is the network node 300.

In some examples, network node 300 is a router or a switch, which performs several essential functions to ensure efficient data transmission and network connectivity. It forwards incoming data packets to their appropriate next-hop devices based on the destination addresses, using routing protocols like Routing Information Protocol (RIP), Open Shortest Path First (OSPF), and Border Gateway Protocol (BGP) to determine the best paths and maintain routing tables. Routers also employ Network Address Translation (NAT) to convert private IP addresses to public ones for internet access, enhancing security and conserving IP addresses. Additionally, routers can function as firewalls, filtering traffic according to security rules to block unauthorized access and prevent attacks. They manage network resources through Quality of Service (QoS) to prioritize critical applications, perform load balancing to distribute traffic across multiple paths, and control bandwidth allocation to prevent congestion. Routers can establish secure Virtual Private Networks (VPNs) using protocols like IPSec (Security Architecture for IP), Layer 2 Tunneling Protocol (L2TP), and Point-to-Point Tunneling Protocol (PPTP) for encrypted communication over public networks. Moreover, routers provide interfaces for network monitoring and management via web-based interfaces, command-line interfaces (CLI), or protocols such as SNMP (Simple Network Management Protocol), enabling administrators to configure settings and monitor traffic efficiently. These functions make routers vital for optimizing network performance, enhancing security, and ensuring reliable connectivity across diverse network environments.

In some examples, network node 300 is a router or a switch installed on a satellite or a similar device moveable in space. For this example, it needs to communicate with other routers or switches inside the same domain and one or more gateways of the domain by using wireless interfaces including antennas and other elements.

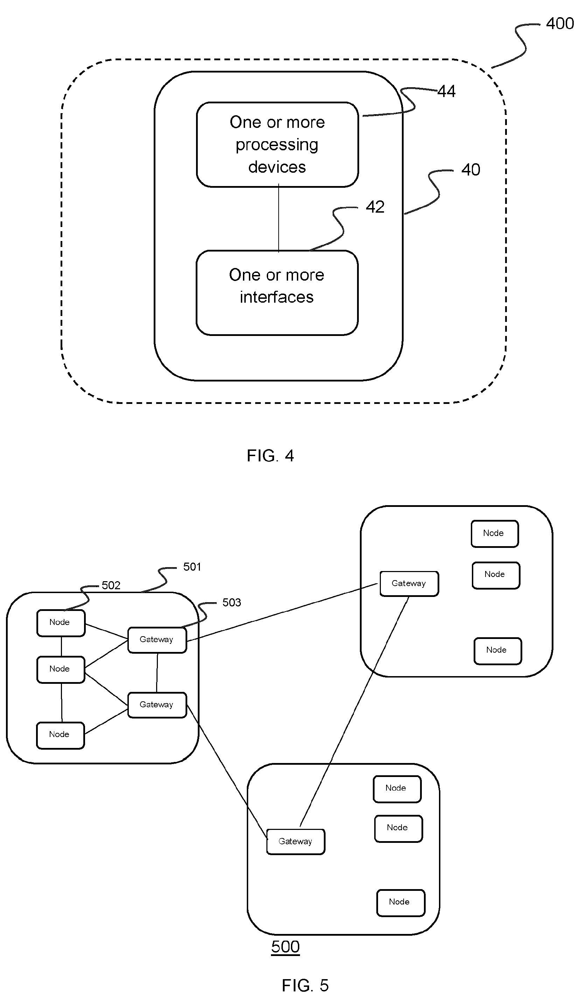

Fig. 4 shows a block diagram of an example of an apparatus 40 for route configuration in a network gateway 400. The apparatus 40 for route configuration in a network gateway comprises one or more interfaces 42, which are configured to communicate in the communication system, and which are coupled to one or more processing devices 44. The one or more processing devices 44 are configured to perform one of the methods 20 for route configuration in a network gateway 400 described herein. Fig. 4 also illustrates an example of a network gateway 400 comprising an example of the apparatus 40. The example of the network gateway 400 is shown in dotted lines as it is optional from the perspective of the apparatus 40. The example of the network gateway 400 may be a gateway in an Internet Protocol, IP, network or a network based on one or more other protocols and a plurality of apparatuses 30may be included in the network to work as domain. In some other examples, the apparatus 40 itself is the network gateway 400.

An example of the apparatus 40 can be implemented in a network gateway 400, which works as a point that connects different network domains, enabling communication and data transfer between them. It operates at various layers of the OSI (Open Systems Interconnection) model, commonly at the network layer, to manage traffic between an internal network and external networks such as the internet. Gateways handle protocol translation, data encapsulation, and routing decisions to ensure that data packets reach their intended destinations across diverse network infrastructures. They also provide security features, such as firewalls and NAT (Network Address Translation), to protect internal networks from unauthorized access and to manage IP address allocations efficiently. Additionally, gateways support functionalities like VPN (Virtual Private Network) connectivity to enable secure remote access to the network. In essence, a gateway acts as an intermediary that facilitates seamless, secure, and efficient communication across different network environments.

An example of the apparatus 40 is a gateway installed on a satellite or a similar device moveable in space. For this example, it needs to communicate with other apparatuses inside the same domain and one or more gateways of other domains by using wireless interfaces including antennas and other elements.

As illustrated in Figs. 3 and 4, the respective one or more processing devices 34, 44 are coupled to the one or more interfaces 32 and 42. The one or more interfaces 32, 42 may correspond to one or more inputs and/or outputs for receiving and/or transmitting information, which may be in digital (bit) values according to a specified code or protocol, within a module, between modules or between modules of different entities. For example, an interface 32, 42 may comprise interface circuitry configured to receive and/or transmit information. In examples an interface 32, 42 may correspond to any means for obtaining, receiving, transmitting or providing analog or digital signals or information, e.g., any connector, contact, pin, register, input port, output port, conductor, lane, etc., which allows providing or obtaining a signal or information. An interface 32, 42 may be configured to communicate (transmit, receive, or both) in a wireless or wireline manner and it may be configured to communicate, i.e., transmit and/or receive signals, information with further internal or external components. The one or more interfaces 32, 42 may comprise optical interfaces, ethernet interfaces, serial interfaces and wireless interfaces and may comprise further components to enable communication in a mobile or fixed communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 34, 44 may be implemented using one or more processing units, one or more circuitries, any means for processing, such as a processor, a computer or a programmable hardware component being operable with accordingly adapted software. In other words, the described function of the one or more processing devices 34 may as well be implemented in software, which is then executed on one or more programmable hardware components. Such hardware components may comprise a general-purpose processor, a Digital Signal Processor (DSP), a micro-controller, etc.

In general, the mobile communication system may be used to establish links among some domains illustrated by Figs. 5, 6 and 7 because at least some of the domains are deployed in an ariel space, and the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6^{th} Generation system (6G), a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Fig. 5 shows a communication network with a dynamically changing topology 500. One or more domains in topology 500 are deployed on satellites and therefore keep moving. In some examples, one or more domains are deployed on ground and the left one or more domains are deployed in the ariel space. As at least one domain in topology 500 moves, the movement could cause some links to fail for some time and then to recover, which would cause deleting routing entries and adding new routing entries frequently if traditional routing technologies are used. A domain or a routing domain is a collection of network nodes that share a common routing protocol and routing information. It functions as a logical grouping within a larger network, where all nodes within the domain use the same set of rules and algorithms to direct data packets. This grouping allows for efficient management and distribution of routing information, reduces the complexity of network management, and ensures consistent routing policies within the domain. Routing domains can also enhance security and optimize network performance by containing and managing routing updates and changes locally.

Each routing domain 501 includes both internal network nodes 502 and gateway nodes 503. Internal network nodes 502 forward traffic to each other and the gateway nodes 503, steering external traffic to the most suited gateway node or the most suited next hop internal node. In some examples, two routing parameters - an end-to-end, e2e, and a local parameter are used and routing decision between internal nodes and gateway nodes is distributed.

Gateway nodes 503 forward outgoing traffic only to peering gateway nodes of other routing domains. The forwarding decision for the e2e path is controlled by the e2e valid parameter, which is related to destination address. Incoming traffic can be forwarded to internal network nodes or to peering gateway nodes of other routing domains. Internal nodes forward traffic to other internal network nodes or to gateway nodes belonging to the same routing domain.

According to some examples, method 10 and/or method 20 comprise implementation of routing architecture and routing policy.

### Routing Architecture

The routing architecture is designed by considering the properties of the underlying physical platforms. The goal is to create routing domains that select topologically stable, quasi-stable, or behaviorally similar parts of the network. This selection reduces the number of topology changes of the selected physical platforms relative to each other, thereby minimizing the resulting link state changes within the routing domains. This approach allows for the aggregation of update information, reducing the number of topology changes that need to be communicated to other routing domains.

Not all mobile physical platforms change their position relative to one another. Thus, not all parts of the network topology are dynamic relative to all other parts; some parts of the network are stable or quasi-stable. Quasi-stable refers to a level of dynamicity that causes changes over time spans which are long in comparison to the communication and processing of these changes.

For instance, in the case of satellites deployed in a Walker delta constellation, each plane can be a candidate for a substructure. For satellites deployed in geostationary orbit, a set of satellites along the equator can form a substructure. For airborne physical network nodes, a group sharing a geographical coverage area in earth-stationary or quasi-earth-stationary mode can form a routing domain. For cars traveling on a highway, selecting cars moving in the same direction is a natural choice for a routing domain.

The key criterion for selecting nodes into a substructure is their topological stability relative to each other. Characteristics indicating this stability include:
- Speed
- Altitude
- Direction
- Flight path
- Uptime behavior
- Availability of power
- Predictability of movement
- Any other characteristics topologically relevant

In the absence of stringent criteria, nodes can be selected based on the possibility to predict or query their movement. Satellite movements are predictable in the context of network topology. Steerable aerial platforms, which can be controlled by a human or autopilot, perform non-predictive maneuvers but can have their positions queried from a preapproved flight plan or directly from the aerial platform. Network nodes hosted on non-controllable physical platforms, such as loT sensors carried by currents, transponders carried by humans or animals, and autonomous vehicles, exhibit completely unpredictable behavior. Therefore, predictability of movements is a valid selector for network topology including a mixture of such nodes.

Each routing domain comprises internal network nodes, which connect only to other nodes within the same routing domain, and gateway nodes, which connect to nodes within the same routing domain and to gateway nodes in other routing domains. Internal network nodes forward traffic to each other and to gateway nodes, directing external traffic to the most suitable gateway node or next-hop internal node.

Gateway nodes forward reachability and topology updates to other gateway nodes. The reachability and topology information forwarded to network nodes within the same routing domain is first aggregated. Gateway nodes also forward their routing domain's reachability or topology information to gateway nodes in other routing domains. This intermediary role allows gateway nodes to reduce the number of updates propagated within the routing domain.

### Routing Policy

Current routing protocols do not distinguish between local and e2e criteria for decision-making. This approach is unsuitable for routing in dynamic topologies, as the number of updates would overload the route update mechanisms. Additionally, single-parameter routing does not consider the performance of network nodes, which is influenced by the characteristics of the physical nodes hosting the network nodes. Some examples of the disclosure introduce a novel approach by distinguishing between local and e2e criteria and distributing the routing decision between internal nodes and gateway nodes.

Gateway nodes and internal nodes can be collocated on the same physical platform. Gateway nodes forward outgoing traffic only to peering gateway nodes of other routing domains. Incoming traffic can be forwarded to internal network nodes or to peering gateway nodes of other routing domains. Internal nodes forward traffic to other internal network nodes or to gateway nodes within the same routing domain.

Routing is based on two parameters: an end-to-end (e2e) parameter and a local parameter. Local refers to the routing domain of the respective network nodes.

The forwarding decision for the e2e path is controlled by the e2e parameter, which is related to the destination address. This parameter can be based on various attributes used in current routing protocols, such as shortest path, least hops, best metric, number of ASes to cross, etc.

The local parameter is based on metrics valid within one routing domain, concerning the path to the gateway through which the traffic leaves the routing domain. Defining values for the local parameter is part of network design and planning. These values must be set specifically for each domain but aligned across the network to ensure traffic is directed to a gateway node connecting with the most suitable routing domain in line with the e2e path. Therefore, the local parameter is set based on the routing domain with which any given gateway node peers. While local parameters are currently used to direct traffic in distinct routing domains, they are set in each domain exclusively based on the traffic engineering requirements of that domain. In this example, they are set separately in each domain but defined based on end-to-end considerations.

Together with the forwarding rule that gateway nodes do not route incoming traffic to other gateway nodes of the same domain but only to internal network nodes, the alignment of the local parameter across all domains allows for end-to-end traffic flows to be directed along their entire path based on local parameters.

The separation of routing tasks and the use of metrics allows for a decoupling of tasks and, consequently, the load for the internal network nodes. Gateways propagate new address ranges to internal nodes. Updates caused by the dynamic topology are handled with metrics. For instance, if a gateway is installed in a satellite node connecting to a ground station and the ground station moves out of line of sight, the gateway does not send a link status update to the internal nodes. Instead, it adapts the metric to a less preferable value. The next gateway node moving into the line of sight of the ground station updates the metric to a more preferable value, thereby shifting the traffic gracefully to the appropriate gateway. Gateways propagate updates only if new address ranges are propagated to them. Thus, updates caused by the dynamic topology are abstracted away from internal nodes, avoiding overload.

This separation can be realized with existing technology if configured according to this description or if policies resulting in equivalent behavior are applied.

Additionally, the use of metrics in some examples is different from current networks. While metrics are used in existing networks to distribute traffic, they operate in a static topology. These examples use metrics to constantly redistribute traffic according to the dynamic topology, making the parametrization of the metrics themselves dynamic. Additionally, creating parameter values based on measured, queried, or calculated topology information is not done in current networks. Current networks calculate topology information based on link state updates, which can only occur after the link undergoes a status change, making proactive processing unfeasible. In contrast, measurement, querying, or calculation of parameter values can be done without time dependency on link status changes. Thus, the adaptation of metrics, local parameters, and other routing information is not exclusively reactive in these examples. The forwarding decision is based on the path with the best-added metric.

Both local and e2e parameters can change over time. Values can be changed together or separately for local and e2e parameters and separately or combined for each node, each node type, an entire routing domain, or synchronously across the entire network.

The e2e routing comprises local routing within the domain, performed by internal network nodes based on the local parameter, and routing between gateway nodes, performed by gateway nodes based on peering relationships with gateway nodes in other domains. Peering relationships involve a one-to-many relationship between gateway nodes, maintained in a routing table and updated by update messages propagated through the peering relationships.

Changes in peering links managed by a gateway node are propagated only to internal nodes of the same routing domain in the form of metrics adapted to the state of the peering link. This includes predictable events. For example, if a gateway node hosted in a satellite moves out of line of sight of a ground station, the time when the link becomes unavailable is predictable. The gateway node holding the active peering link propagates a series of updates with decreasing metrics to the internal nodes, allowing them to shift traffic to another gateway node with a better metric. Conversely, a gateway node hosted on a satellite moving into line of sight propagates a series of updates with increasing metrics, shifting traffic gracefully from the satellite moving out to the satellite moving into line of sight. Local parameter values must be spaced by at least the number of parallel peering links to any given neighboring routing domain, which corresponds to the number of gateways in the routing domain.

### Usage Examples

### Classical Use

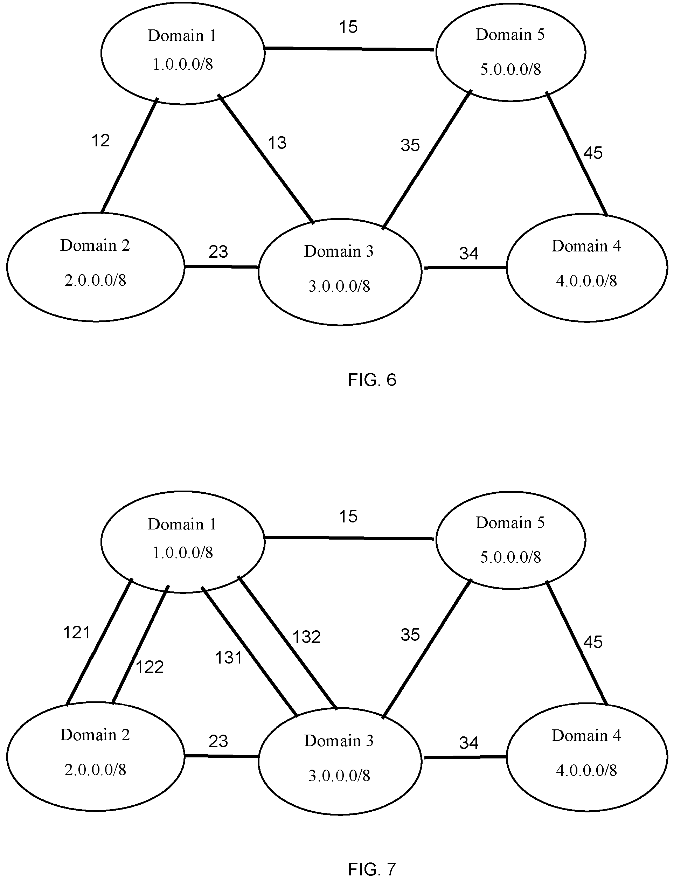

In classical use in a network illustrated by FIG. 6, routing domains take forwarding decisions typically based on target addressed and use optimization based on the specific conditions of each domain. In an example of classical use, a network includes routing domains 1 to 5, with the address ranges given in the drawing, connected to each other by links 12, 13, 23, 34, 35 and 45.

The address range 5.0.0.0/8, owned by routing domain 5, is reachable for routing domain 1 through both its peering links 12, 13 and 15. From domain 1, target domain 5 is reachable via link 15 directly, in one hop. But domain 1 might take the decision to route the traffic via link 12 to domain 2 as the next hop, if this is in any way beneficial. Such benefits can be based both on technical and commercial considerations. The link to domain 2 might be connected to a more performant gateway or routing traffic through domain 2 is commercially cheaper.

Domain 2 will forward traffic to domain 3, as there is no forwarding alternative. Domain 3 will take the forwarding decision again based with the objective of optimizing inside of and for domain 3. Hence traffic might be routed from domain 3 directly to domain 5 or via domain 4. In the absence of other optimization criteria or in case they don't allow a distinction, the forwarding decision is based on the shortest path to the target.

### Usage of some examples of the application

An example is described in reference to FIG. 7. based on the distinctions between gateway nodes and internal network nodes, where the example uses the basic structure of an exemplary network topology in the classical usage, and further consider characteristics of a changing topology and differences between gateway and internal network nodes.

As illustrated in FIG. 7, domain 1 is respectively connected to domain 2 and domain 3 not only by one link, but by two pairs of links or two link pairs, that is links 121 and 122 between domain 1 and domain 2, and links 131 and 132 between domain 1 and domain 3. In the example, domain 1 may be a domain formed by satellites on an orbit around the globe being connected to the terrestrial domains 2 and 3 via two ground stations each. As the visibility of the ground stations depends on the orbital position of satellites hosting the gateways, internal network nodes taking forwarding decisions not only have to find the optimal next hop domain, but also to select the best gateway.

As described above, the metrics to select gateways in routing table entries in the internal network nodes are adapted based on the topology change. The routing table entries are routing entries in one or more routing tables. In a specific example, the adaption is based on the line-of-sight conditions between a gateway node of domain 1 and the gateway node of domain 2, representing a ground station.

In an example, the routing table of an internal network node of domain 1 may be Table 1 as follows and the metric with the lowest numerical value is given the highest priority. In some other examples, the metric with the highest numerical value is given the highest priority.

**Table 1**

| Link | Local Parameter (metric) | Destination Adress Range |
|---|---|---|
| 15 | Prio 30 | 5.0.0.0/8, 4.0.0.0/8, 3.0.0.0/8, 2.0.0.0/8 |
| 121 | Prio 21 | 5.0.0.0/8, 4.0.0.0/8, 3.0.0.0/8, 2.0.0.0/8 |
| 122 | Prio 22 | |
| 131 | Prio 11 | 5.0.0.0/8, 4.0.0.0/8, 3.0.0.0/8, 2.0.0.0/8 |
| 132 | Prio 12 | |

In some examples, the network node of domain 1 receives first priority update information for a first link to a destination from a first gateway, where the first gateway is on the first link, and the network node and the first gateway are in one same domain. For example, the destination may be an address of domain 5, the first link to the destination could be any link of links 15, 121, 122, 131 and 132, and the first gateway is a gateway in domain 1.

In some examples, the first priority update information for the first link is determined by the first gateway and then sent to the network node by the first gateway. The determination may be based on a transmission capability of the first link and/or be based on a mobility attribute of the next-hop domain. For example, domain 2 is a next-hop domain of domain 1 for data destined for domain 5. Furthermore, the determination may be triggered based on an estimated link failure caused by comparative movement between the network gateway and another network gateway, which are two end points of the link, or be triggered by a fixed time interval. With respect to the transmission of the first priority update information from the first gateway to the network node, it may be multicast or unicast (broadcast in the domain of the gateway). The method of determining and sending the first priority update information performed by the first gateway also applies to priority update information of other links between the domain 1 and other next-hop domains, such as links 2 and 5 where link 3 is considered as the first link in an example.

Then the network node of domain 1 updates the first priority information of first routing information used to direct data to the destination via the first link. For example, when the first link is link 131 and the first priority information is a metric value 11, the network node updates the value 11 into the "Local Parameter" field of link 131 in Table 1, replacing the value in the field when the first priority update information is received by the network node. The metric value 11 indicates the priority of link 131 for directing data to from the network node to domain 5. In another example, when the first link could be link 132 and the first priority information is a metric value 12, the network node updates the value 12 into the "Local Parameter" field of link 132 in Table 1. In yet another example, when the first link could be link 121 and the first priority information is a metric value 21, the network node updates the value 21 into the "Local Parameter" field of link 132 in Table 1. The priority information, such as a metric value, is maintained and valid on nodes in the domain where the network node and the gateway node are located. The priority information is a "Local Parameter" at the network node. With respect to e2e links to a destination, the priority information serves as an e2e criteria on determining a transmission link among all the candidate links to the destination. In an example associated with Table 1, in order to send data to its destination, the network node determines a transmission link, such as link 131, based on the priority information in table 1, and consequently the network node determines a corresponding gateway node which is both in the domain and on the link 131.

Then, the network node routes the data to the corresponding gateway node based on local routing information, so that the corresponding gateway node could further route the data along link 131 to the destination. Routing the data to the determined gateway node based on the local routing information includes that the network node searches a next hop by searching a routing table stored in the network node using a destination, such as a destination IP address. In an example where a destination refers to a destination IP address, the searching the routing table includes searching the routing table using the destination IP address, so that the network node obtains an IP address of a next hop of the network node. The next hop could be the determined gateway node or another network node in the domain. If the next hop is the determined gateway, the IP address of the next hop is the IP address of the determined gateway, and the network node uses the IP address of the determined gateway to route the data to the determined gateway. If the next hop is another network node in the domain, the network node will obtain the IP address of the other network node from the routing table and route the data to the other network node by using the IP address of the network node. The other network node repeats the search and forwarding process based on the destination IP address to make the data to arrive at the determined gateway node.

In some examples, the network gateway in the first domain has a more stable geographic relationship with the first domain than a second domain, where the first domain and the second domain are connected by one or more links. For example, a gateway of domain 1 in Fig. 6 or 7 has a more stable geographic relationship with domain 1 than domain 2 or 3. Assuming that all devices of domain 1 are deployed on satellites and all devices of domain 2 are deployed on ground, then a gateway of domain 1 must have the same or similar track of movement to the track of domain 1 otherwise the gateway will lose its connection to domain 1. And obviously the gateway which is deployed on a satellite has a more stable geographic relationship with the domain where it is located than another domain deployed on ground of earth.

An entry that is in Table 1 and is different from the entry serves as or is the first routing information could serve as or be the second routing information. For example, when entry of link 131 is the first routing information, entry of link 132 or 121 could be the second routing information.

When the network node in the domain 1 receives data destined for the domain 5, the network node in the domain 1 determines a transmission link for the data based on the updated first priority information and the second priority information. For example, when the first link is link 131 and the second link is link 132, the network node may determine a transmission link based on the priority information of link 131, **11,** or expressed as Prio **11,** and the priority information of link 132, 12, or expressed as Prio 12, where priority information of link 131 indicates link 131 has a higher priority than link 132. The link having highest priority in Table 1 is determined as the transmission link. As illustrated by Table 1, link 131 has the highest priority, then link 131 is determined as the transmission link. If another link has the highest priority, the other link is determined as the transmission link.

In some examples that the first link in Table 1 is in failure for sending data to the destination, the first priority update information received by the network node is configured by the first gateway to set the priority of the first link so low that the first link cannot be determined by the node as a transmission link for data destined for the destination. For example, if the failed first link is 131, then the first priority update information would not cause the "Local Parameter" of link 131 to be **11,** but another value which indicates the priority of link 131 is so low that link 131 cannot be as the transmission link for data destined for domain 5. For example, the first priority update information would make the "Local Parameter" of link 131 to be a value more than 30, which means link 131 has the lowest priority among all the links to domain 5. In another example, the first priority update information would make the "Local Parameter" of link 131 to be a value more than 12, than link 132 would be determined as the transmission link, which also means that priority update information of link 131 causes the priority of the link 131 to be so low that the link 131 cannot be determined as the transmission link. In one example, the value of the first priority update information is set to the lowest value in its value range to cause the priority of the first link to be so low that the first link cannot be determined as the transmission link. For example, if the value range is 1-100, the priority value of a failed link will be set to 100, so that the failed link cannot be determined as the transmission link. In another example, the value of the first priority update information is set to a pre-determined value to cause the priority of the first link to be so low that the first link cannot be determined as the transmission link. For example, although the value range is 1-100, a specific value in the value range may be selected to indicate the failure of the link. Then when the priority value of a link is set to this specific value, the failed link also cannot be determined as the transmission link.

By this way, routing shock which would occur caused by deleting and adding routing entries according to traditional techniques will be avoided, especially for a network in which some domains keep moving in an ariel space.

In some examples, besides receiving the first priority update information for the first link, the network node receives second priority update information for a second link to the same destination from a second gateway in the same domain. Based on the second priority update information, the network node may obtain the second priority information by updating previous second priority information based on the received second priority update information. For example, if link 132 is the second link, the network node may receive priority update information of link 132 and then obtain the priority value 12 based on the received priority update information of link 132.

In some examples, the priority of a link is determined by the transmission capability of the link, such as bandwidth, delay and/or quality of service, QoS. The destination in the examples may be Internet Protocol, IP, destination, such as an IP address or a range of IP address, or may be a destination of other addressing schemes and/or protocol stacks other than IP, such as AppleTalk, Internetwork Packet Exchange, IPX, Systems Network Architecture, SNA, and Zigbee, etc.

The metric value may be defined based on two considerations. Traffic to another orbital domain is supposed to be routed via a terrestrial domain if possible, and shorter paths are to be preferred. Hence the links to domain 3 are in the group with the highest priority. As there are two links from domain 1 to domain 3, terminated at the two satellites which, in the example, can establish a ground link with the gateway of domain 3, which represents a ground station, these links are distinct, but occupy a value range lower than that of the next following group, links 121 and 122, who occupy a higher value range. The group with the highest value has only one member link, 15.

In some examples, the metric value in the routing table comprises two portions, where the first portion indicates the priority of a next-hop domain, and the second portion indicates priorities of links to the next-hop domain. As illustrated by Fig. 7, data is to be sent from domain 1 to domain 5, Table 1 and Table 2 are routing tables of a network node in domain 1, and the field "Local Parameter (metric)" indicates the priorities of links from domain 1 to its next-hop domain to domain 5, where the next-hop domains comprise domain 2, domain 3 and domain 5. The first portion of domains 2, 3, and 5 are 2, 1 and 3, which indicates that domain 3, whose value of the first portion is the lowest, has the highest priority among the three domains. Then the network node in domain 1 determines the transmission link from links 131 and 132 because these two links are all links between domain 1 and domain 3. Because the second portions of links 131 and 132 are respectively 1 and 2, then link 131 has a higher priority than link 132 and is determined as the transmission link.

In some examples, the priorities of the links to a destination are determined by a gateway. After the priorities are determined, the gateway sends the priorities to network nodes inside the domain where the gateway is located. In other words, the gateway and the network nodes are in the same domain. The gateway may be called network gateway and the network nodes in the domain may be called internal network nodes because they are inside the domain while the gateway is on the border of the domain.

The distinct values priority information, which is called Local Parameter (metric) in the exemplary routing table, of links 121-122 and 131-132 represent the states of the links at a given point in time. After some time, Table 1 will be changed into Table 2, which represents the states of the links at a later point in time.

**Table 2**

| Link | Local Parameter (metric) | Destination Adress Range |
|---|---|---|
| 15 | Prio 30 | 5.0.0.0/8, 4.0.0.0/8, |
| | | 3.0.0.0/8, 2.0.0.0/8 |
| 121 | Prio 21 | 5.0.0.0/8, 4.0.0.0/8, |
| 122 | Prio 22 | 3.0.0.0/8, 2.0.0.0/8 |
| 131 | Prio 13 | 5.0.0.0/8, 4.0.0.0/8, |
| 132 | Prio 11 | 3.0.0.0/8, 2.0.0.0/8 |

In Table 2, link 132 has the better conditions in its group. In that way the internal network nodes routing table entries are updated in the priority information and the updated routing table entries are used to route the traffic destined for domain 5 to routing domain 3 via link 132, which means the traffic is routed via the second gateway connecting domain 1 to domain 3.

In some examples, the first priority information and second priority information are respectively associated with metrics indicating a priority value of the first and second link to the destination. For example, when the first link is 131 and the second link is 132, a metric indicating the priority of link 131 is 13 and a metric indicating the priority of link 132 is 11 according to Table 2. The first priority information may be the value 13 or be information corresponding to 13; and the second information may be the value 11 or may be information corresponding to 11.

Please note that the example uses a local parameter representing priority of a link, stressing its nature as a metric and does not detail the combination of shortest path and local parameter, which can still be used in other examples.

Furthermore, the use of the presented routing scheme does not restrict the use of other classical routing schemes in parallel, e.g. inside the domain or the combination with the presented scheme. In case of combining the presented routing scheme with a classical approach, the classical approach is used to select the links which can be used to reach the destination generally, then the presented scheme is used to make the forwarding decision under the preselected links. For example, an internal network node determines a link, such as link 13, without using the priority information in the routing table, and then the node determines link 132 as the link for traffic transmission based on the metric of link 131 and the metric of link 132. When a link includes a plurality of links, the link could be considered as a trunk link. For example, as link 13 includes links 131 and 132, link 13 could be considered as a trunk link.

### Specific Functions

### Traffic Engineering

Traffic engineering for handling traffic with different quality of service classes is implemented by splitting the routing information according to traffic type. This can include any discerning parameter or combinations thereof, such as source or destination addresses, source or destination ports, DSCP bits, traffic type, or next level protocol header fields. These parameters are added to the routing table, and a local parameter set is applied to each of them. Hence, traffic is distributed over available peering links between routing domains based on traffic type, in a way that avoids overloading. For example, traffic can be moved to a small bandwidth airborne-to-airborne routing domain link when an alternative ground station link moves out of range, causing too many errors or packet loss on the high bandwidth ground station link.

### Special Networks

For most of the currently existing or planned satellite constellations and airborne platform swarms, separating into routing domains is sufficient to integrate all network nodes into a routing architecture. If future swarms or constellations scale up to the point where one routing domain includes too many network nodes, e.g., an airborne platform swarm flying in parallel with tens of thousands of network nodes, the present concept can be scaled hierarchically by nesting routing domains: One domain, too large to handle control plane traffic end-to-end, is split into two or more routing domains, each peering with each other and the primary routing domain, forming a sublayer of routing domains. Peering with other primary or single-layer routing domains is done by the primary routing domain, which advertises the routes of its lower-layer routing domains in a summary way to its peers. This concept can be extended to more than two layers.

In networks consisting only of steerable physical platforms, such as drones, ships, or cars, it might not be possible to identify topologically stable or quasi-stable substructures. In this case, the invention can be applied to a single physical platform by integrating multiple network nodes on it, acting as internal and gateway network nodes respectively. For example, by handling physical interfaces of the platform as gateway nodes and internal interfaces as internal nodes.

### Implementation Examples

### Implementation Based on BGP

When using BGP to implement the presented concept, routing domains are created in the form of Autonomous Systems (AS). They can use both private and public AS numbers. On all peering links to other routing domains, public and private, eBGP is used. BGP's path length parameter is used as the end-to-end parameter, while local preference or any other functionally equivalent parameter (e.g., weight) is used as a local cost parameter to distribute traffic to outgoing interfaces. The redistribution of traffic depending on the state of peering links to neighboring routing domains is based on the dampening level. The dampening level is also used for traffic engineering and predictable topology changes. Scaling is based on BGP confederations. All BGP optimizations, such as route reflectors and minimal route advertisement interval (MRAI), are still usable.

### BGP Enhancements

To further optimize BGP for routing in dynamic topologies, the following extensions are added to the protocol:
1. Make the hold time configurable and automatically adjustable depending on flight path characteristics, so it is large enough to maintain neighbor relationships in case of peering link reestablishment, e.g., until the next ground station moves into line of sight or the traffic is gracefully shifted from the satellite moving out to the satellite moving into line of sight. The used value can be set algorithmically or manually.
2. Make keepalive and holdover timers configurable and automatically adjustable depending on flight path characteristics, to reflect downtime periods in case of peering link reestablishment, i.e., when the relative angular speed of spaceborne or aerial vehicles exceeds the agility of tracking mechanics on directed interfaces.

### Implementation Based on ISIS

When using ISIS to implement the presented concept, routing domains are created in the form of areas. On all peering links to other routing domains, L2 adjacencies are used. All routers on peering links between areas are L1/L2 instances. Adjacencies inside the routing domain are handled on L1. Shortest path calculation is used for the end-to-end routing parameter, with the local parameter based on the metrics on L2 links to other areas, summing up to the total path cost. For traffic engineering and predictable topology changes, peering links are flooded with LSPs (PSNPs) with adapted cost metrics. Scaling is achieved by using more than one area with corresponding L2 adjacencies per routing domain.

### Generic Enhancements

Generic enhancements are not applicable to a single routing protocol but can be applied by extending the route advertisements of any existing or newly developed routing protocol used for routing in dynamic topologies:
1. Extending the data exchanged between routing domains with local cost parameters so all ASes can derive the overall topology.
2. Extending the data exchanged between routing domains with physical platform attributes to distinguish between, e.g., satellite, HAP, LAP, terrestrial, ship, land vehicle, airplane, balloon, etc.
3. Extending the data exchanged between routing domains with flight path information of the AS nodes.
4. Differentiating timers depending on purpose and making them configurable and automatically adjustable (e.g., distinct timers for regular/scheduled events and error events) so values for any point in time can be derived from flight path and constellation behavior.
5. Transmitting physical network node specifics such as available power, available functionality for future time periods (which might depend on available power or position of the physical node), planned hibernation periods, and flight path characteristics, both related to the physical node itself and to other physical nodes (e.g., availability of links depending on expected angular velocity between two physical nodes).
6. Hibernate routing relationships for the time period links are non-operational due to flight path impact. The hibernation period can be fixed or open, with adjacent routers scheduling events depending on their state.

**The aspects and features described** in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for routing data at a network node (300), comprising:
receiving (11), by the network node (300), first priority update information for a first link to a destination from a first gateway (400), wherein the first gateway (400) is on the first link, the network node (300) and the first gateway (400) are in one same domain and the first link is from the first gateway to the destination being out of the domain, and wherein the first priority update information is caused by changes of a dynamically changing topology;
updating (12), by the network node (300), first priority information of first routing information used to direct data to the destination via the first link based on the received first priority update information to avoid routing shock, wherein the network node (300) comprises second routing information used to direct data to the destination via a second link, and wherein the second routing information comprises second priority information;
receiving (13), by the network node (300), data destined for the destination;
determining (14), by the network node (300), a transmission link for the data based on the updated first priority information and the second priority information; and
sending (15), by the network node (300), the data via the transmission link.

2. The method (10) of claim 1, wherein in response to the first link being in failure for sending data to the destination, the first priority update information causes a priority of the first link to be so low that the first link cannot be determined as the transmission link.

3. The method (10) of claim 2, wherein a value of the first priority update information is the lowest value in its value range or a value of the first priority update information is a pre-determined value designed to cause the priority of the first link to be so low that the first link cannot be determined as the transmission link.

4. The method (10) of one of the claims 1 to 3, the method (10) further comprising:
receiving, by the network node (300), second priority update information of the second link; and
obtaining, by the network node (300), the second priority information by updating previous second priority information based on the received second priority update information.

5. The method (10) of any one of claims 1 to 4, wherein the first priority information and second priority information are respectively associated with metrics indicating a priority value of the first and second link to the destination, and/or wherein the first priority information is based on a transmission capability of the first link.

6. The method of any one of claims 1 to 5, wherein the sending (15) of the data via the transmission link comprises routing the data via one or more network nodes of the domain, wherein the routing in the domain is based on local routing information communicated within the domain, and wherein the first routing information and the second routing information are in a routing table.

7. A method (20) for route configuration in a network gateway (400), comprising:
determining (21), by the network gateway (400), priority update information of a link from the network gateway (400) located in a first domain to a destination outside of the first domain, wherein the priority update information is caused by changes of a dynamically changing topology; and
sending (22), by the network gateway (400), the priority update information of the link to at least one network node (300) inside the first domain to avoid routing shock.

8. The method (20) of claim 7, wherein in response to the link being in failure for sending data to the destination, the priority update information is configured to set a priority of the link so low that the link cannot be determined by the network node (300) as a transmission link for data destined for the destination.

9. The method (20) of claim 7 or 8, wherein the determination of the priority update information is triggered based on an estimated link failure caused by comparative movement between the network gateway (400) and another network gateway, which are two end points of the link.

10. The method (20) of one of claims 7 to 9, wherein the network gateway (400) has a more stable geographic relationship with the first domain than a second domain, wherein the first domain and the second domain are connected by the link.

11. The method (20) of any one of claims 7 to 10, wherein priority update information is based on the transmission capability of the link.

12. The method (20) of any one of claims 7 to 11, wherein the sending the priority update information of the link to at least one network node (300) inside the domain comprises:
multicasting, by the gateway, the priority information of the link in the domain.

13. A computer program having a program code for performing one of the methods (10; 20) of one of the claims 1 to 12, when the computer program is executed on a computer, a processor, or a programmable hardware component.

14. An apparatus (30; 40), comprising
one or more interfaces (32; 42) configured to communicate; and
one or more processing devices (34; 44) configured to perform one of the methods (10; 20) of one of the claims 1 to 12.

15. A system, comprising
a first apparatus (30) of claim 14, wherein the first apparatus (30) is configured to perform one of the methods (10) of one of the claims 1 to 6; and
a second apparatus (40) of claim 14, wherein the second apparatus (40) is configured to perform one of the methods (20) of one of the claims 7 to 12.

## Patentansprüche

1. Ein Verfahren (10) zum Routen von Daten an einem Netzwerkknoten (300), umfassend:
Empfangen (11), durch den Netzwerkknoten (300), von ersten Prioritätsaktualisierungsinformationen für eine erste Verbindung zu einem Ziel von einem ersten Gateway (400), wobei das erste Gateway (400) auf der ersten Verbindung ist, der Netzwerkknoten (300) und das erste Gateway (400) in einer gleichen Domäne sind und die erste Verbindung von dem ersten Gateway zu dem Ziel ist, das außerhalb der Domäne ist, und wobei die ersten Prioritätsaktualisierungsinformationen durch Änderungen einer sich dynamisch ändernden Topologie verursacht werden;
Aktualisieren (12), durch den Netzwerkknoten (300), von ersten Prioritätsinformationen von ersten Routing-Informationen, die verwendet werden, um Daten über die erste Verbindung zu dem Ziel zu leiten, basierend auf den empfangenen ersten Prioritätsaktualisierungsinformationen, um einen Routing-Schock zu vermeiden, wobei der Netzwerkknoten (300) zweite Routing-Informationen umfasst, die verwendet werden, um Daten über eine zweite Verbindung zu dem Ziel zu leiten, und wobei die zweiten Routing-Informationen zweite Prioritätsinformationen umfassen;
Empfangen (13), durch den Netzwerkknoten (300), von Daten, die für das Ziel bestimmt sind;
Bestimmen (14), durch den Netzwerkknoten (300), einer Übertragungsverbindung für die Daten basierend auf den aktualisierten ersten Prioritätsinformationen und den zweiten Prioritätsinformationen; und
Senden (15), durch den Netzwerkknoten (300), der Daten über die Übertragungsverbindung.

2. Das Verfahren (10) gemäß Anspruch 1, wobei ansprechend darauf, dass die erste Verbindung keine Daten an das Ziel senden kann, die ersten Prioritätsaktualisierungsinformationen verursachen, dass eine Priorität der ersten Verbindung so niedrig ist, dass die erste Verbindung nicht als die Übertragungsverbindung bestimmt werden kann.

3. Das Verfahren (10) gemäß Anspruch 2, wobei ein Wert der ersten Prioritätsaktualisierungsinformationen der niedrigste Wert in seinem Wertebereich ist oder ein Wert der ersten Prioritätsaktualisierungsinformationen ein vorbestimmter Wert ist, der so entworfen ist, dass er bewirkt, dass die Priorität der ersten Verbindung so niedrig ist, dass die erste Verbindung nicht als die Übertragungsverbindung bestimmt werden kann.

4. Das Verfahren (10) gemäß einem der Ansprüche 1 bis 3, das Verfahren (10) ferner umfassend:
Empfangen, durch den Netzwerkknoten (300), von zweiten Prioritätsaktualisierungsinformationen der zweiten Verbindung; und
Erhalten, durch den Netzwerkknoten (300), der zweiten Prioritätsinformationen durch Aktualisieren vorheriger zweiter Prioritätsinformationen basierend auf den empfangenen zweiten Prioritätsaktualisierungsinformationen.

5. Das Verfahren (10) gemäß einem der Ansprüche 1 bis 4, wobei die ersten Prioritätsinformationen und die zweiten Prioritätsinformationen jeweils Metriken zugeordnet sind, die einen Prioritätswert der ersten und der zweiten Verbindung zu dem Ziel angeben, und/oder wobei die ersten Prioritätsinformationen auf einer Übertragungsfähigkeit der ersten Verbindung basieren.

6. Das Verfahren gemäß einem der Ansprüche 1 bis 5, wobei das Senden (15) der Daten über die Übertragungsverbindung ein Routen der Daten über einen oder mehrere Netzwerkknoten der Domäne umfasst, wobei das Routen in der Domäne auf lokalen Routinginformationen basiert, die innerhalb der Domäne kommuniziert werden, und wobei die ersten Routinginformationen und die zweiten Routinginformationen in einer Routingtabelle sind.

7. Ein Verfahren (20) zur Routenkonfiguration in einem Netzwerk-Gateway (400), umfassend:
Bestimmen (21), durch das Netzwerk-Gateway (400), von Prioritätsaktualisierungsinformationen einer Verbindung von dem Netzwerk-Gateway (400), das sich in einer ersten Domäne befindet, zu einem Ziel außerhalb der ersten Domäne, wobei die Prioritätsaktualisierungsinformationen durch Änderungen einer sich dynamisch ändernden Topologie verursacht werden; und
Senden (22), durch das Netzwerk-Gateway (400), der Prioritätsaktualisierungsinformationen der Verbindung an zumindest einen Netzwerkknoten (300) innerhalb der ersten Domäne, um einen Routing-Schock zu vermeiden.

8. Das Verfahren (20) gemäß Anspruch 7, wobei ansprechend darauf, dass die Verbindung keine Daten an das Ziel senden kann, die Prioritätsaktualisierungsinformationen ausgebildet sind, um eine Priorität der Verbindung so niedrig einzustellen, dass die Verbindung nicht durch den Netzwerkknoten (300) als eine Übertragungsverbindung für Daten bestimmt werden kann, die für das Ziel bestimmt sind.

9. Das Verfahren (20) gemäß Anspruch 7 oder 8, wobei die Bestimmung der Prioritätsaktualisierungsinformationen basierend auf einem geschätzten Verbindungsfehler ausgelöst wird, der durch eine Vergleichsbewegung zwischen dem Netzwerk-Gateway (400) und einem anderen Netzwerk-Gateway verursacht wird, die zwei Endpunkte der Verbindung sind.

10. Das Verfahren (20) gemäß einem der Ansprüche 7 bis 9, wobei das Netzwerk-Gateway (400) eine stabilere geografische Beziehung mit der ersten Domäne als mit einer zweiten Domäne hat, wobei die erste Domäne und die zweite Domäne durch die Verbindung verbunden sind.

11. Das Verfahren (20) gemäß einem der Ansprüche 7 bis 10, wobei Prioritätsaktualisierungsinformationen auf der Übertragungsfähigkeit der Verbindung basieren.

12. Das Verfahren (20) gemäß einem der Ansprüche 7 bis 11, das Senden der Prioritätsaktualisierungsinformationen der Verbindung an zumindest einen Netzwerkknoten (300) innerhalb der Domäne umfassend:
Multicasten, durch das Gateway, der Prioritätsinformationen der Verbindung in der Domäne.

13. Ein Computerprogramm mit einem Programmcode zum Durchführen eines der Verfahren (10; 20) gemäß einem der Ansprüche 1 bis 12, wenn das Computerprogramm auf einem Computer, einem Prozessor oder einer programmierbaren Hardwarekomponente ausgeführt wird.

14. Eine Vorrichtung (30; 40), umfassend
eine oder mehrere Schnittstellen (32; 42), die ausgebildet sind, um zu kommunizieren; und
eine oder mehrere Verarbeitungsvorrichtungen (34; 44), die ausgebildet sind, um eines der Verfahren (10; 20) gemäß einem der Ansprüche 1 bis 12 durchzuführen.

15. Ein System, umfassend
eine erste Vorrichtung (30) gemäß Anspruch 14, wobei die erste Vorrichtung (30) ausgebildet ist, um eines der Verfahren (10) gemäß einem der Ansprüche 1 bis 6 durchzuführen; und
eine zweite Vorrichtung (40) gemäß Anspruch 14, wobei die zweite Vorrichtung (40) ausgebildet ist, um eines der Verfahren (20) gemäß einem der Ansprüche 7 bis 12 durchzuführen.

## Revendications

1. Procédé (10) de routage de données au niveau d'un nœud de réseau (300), comprenant le fait de :
recevoir (11), par le nœud de réseau (300), des premières informations de mise à jour de priorité pour une première liaison à une destination à partir d'une première passerelle (400), dans lequel la première passerelle (400) est sur la première liaison, le nœud de réseau (300) et la première passerelle (400) sont dans un même domaine et la première liaison est de la première passerelle à la destination étant hors du domaine, et dans lequel les premières informations de mise à jour de priorité sont provoquées par des changements d'une topologie changeant dynamiquement ;
mettre à jour (12), par le nœud de réseau (300), des premières informations de priorité de premières informations de routage utilisées pour diriger des données vers la destination via la première liaison sur la base des premières informations de mise à jour de priorité reçues pour éviter un choc de routage, dans lequel le nœud de réseau (300) comprend des deuxièmes informations de routage utilisées pour diriger des données vers la destination via une deuxième liaison, et dans lequel les deuxièmes informations de routage comprennent des deuxièmes informations de priorité ;
recevoir (13), par le nœud de réseau (300), des données destinées à la destination ;
déterminer (14), par le nœud de réseau (300), une liaison de transmission pour les données sur la base des premières informations de priorité mises à jour et des deuxièmes informations de priorité ; et
envoyer (15), par le nœud de réseau (300), les données via la liaison de transmission.

2. Procédé (10) selon la revendication 1, dans lequel, en réponse à la défaillance de la première liaison d'envoyer des données à la destination, les premières informations de mise à jour de priorité amènent une priorité de la première liaison à être si basse que la première liaison ne peut pas être déterminée comme étant la liaison de transmission.

3. Procédé (10) selon la revendication 2, dans lequel une valeur des premières informations de mise à jour de priorité est la valeur la plus basse dans sa plage de valeurs ou une valeur des premières informations de mise à jour de priorité est une valeur prédéterminée conçue pour amener la priorité de la première liaison à être si basse que la première liaison ne peut pas être déterminée comme étant la liaison de transmission.

4. Procédé (10) selon l'une des revendications 1 à 3, le procédé (10) comprenant en outre le fait de :
recevoir, par le nœud de réseau (300), des deuxièmes informations de mise à jour de priorité de la deuxième liaison ; et
obtenir, par le nœud de réseau (300), les deuxièmes informations de priorité en mettant à jour des deuxièmes informations de priorité précédentes sur la base des deuxièmes informations de mise à jour de priorité reçues.

5. Procédé (10) selon l'une des revendications 1 à 4, dans lequel les premières informations de priorité et les deuxièmes informations de priorité sont respectivement associées à des métriques indiquant une valeur de priorité des première et deuxième liaisons à la destination, et/ou dans lequel les premières informations de priorité sont basées sur une capacité de transmission de la première liaison.

6. Procédé selon l'une des revendications 1 à 5, dans lequel l'envoi (15) des données via la liaison de transmission comprend le routage des données via un ou plusieurs nœuds de réseau du domaine, dans lequel le routage dans le domaine est basé sur des informations de routage locales communiquées dans le domaine, et dans lequel les premières informations de routage et les deuxièmes informations de routage sont dans une table de routage.

7. Procédé (20) de configuration de route dans une passerelle de réseau (400), comprenant le fait de :
déterminer (21), par la passerelle de réseau (400), des informations de mise à jour de priorité d'une liaison de la passerelle de réseau (400) située dans un premier domaine à une destination à l'extérieur du premier domaine, dans lequel les informations de mise à jour de priorité sont provoquées par des changements d'une topologie changeant dynamiquement ; et
envoyer (22), par la passerelle de réseau (400), les informations de mise à jour de priorité de la liaison à au moins un nœud de réseau (300) à l'intérieur du premier domaine pour éviter un choc de routage.

8. Procédé (20) selon la revendication 7, dans lequel, en réponse à la défaillance de la liaison d'envoyer des données à la destination, les informations de mise à jour de priorité sont configurées pour établir une priorité de la liaison si basse que la liaison ne peut pas être déterminée par le nœud de réseau (300) comme étant une liaison de transmission pour des données destinées à la destination.

9. Procédé (20) selon la revendication 7 ou 8, dans lequel la détermination des informations de mise à jour de priorité est déclenchée sur la base d'une défaillance de liaison estimée provoquée par un mouvement comparatif entre la passerelle de réseau (400) et une autre passerelle de réseau, qui sont deux points d'extrémité de la liaison.

10. Procédé (20) selon l'une des revendications 7 à 9, dans lequel la passerelle de réseau (400) a une relation géographique plus stable avec le premier domaine qu'avec un deuxième domaine, dans lequel le premier domaine et le deuxième domaine sont connectés par la liaison.

11. Procédé (20) selon l'une des revendications 7 à 10, dans lequel les informations de mise à jour de priorité sont basées sur la capacité de transmission de la liaison.

12. Procédé (20) selon l'une des revendications 7 à 11, dans lequel l'envoi des informations de mise à jour de priorité de la liaison à au moins un nœud de réseau (300) à l'intérieur du domaine comprend le fait de :
multidiffuser, par la passerelle, les informations de priorité de la liaison dans le domaine.

13. Programme informatique ayant un code de programme pour réaliser l'un des procédés (10 ; 20) selon l'une des revendications 1 à 12, lorsque le programme informatique est exécuté sur un ordinateur, un processeur ou un composant matériel programmable.

14. Appareil (30 ; 40), comprenant
une ou plusieurs interfaces (32 ; 42) configurées pour communiquer ; et
un ou plusieurs dispositifs de traitement (34 ; 44) configurés pour réaliser l'un des procédés (10 ; 20) selon l'une des revendications 1 à 12.

15. Système comprenant
un premier appareil (30) selon la revendication 14, dans lequel le premier appareil (30) est configuré pour réaliser l'un des procédés (10) selon l'une des revendications 1 à 6 ; et
un deuxième appareil (40) selon la revendication 14, dans lequel le deuxième appareil (40) est configuré pour réaliser l'un des procédés (20) selon l'une des revendications 7 à 12.
